# EUROPEAN PATENT SPECIFICATION

(11) **EP 4 244 747 B1**
(45) Date of publication and mention of the grant of the patent: **02.04.2025**
(21) Application number: 21811287.8
(22) Date of filing: 12.11.2021
(51) Int. Cl.: G06F 21/55, G06F 21/56

(54) **FILE INTEGRITY ASSESSMENT TO DETECT MALWARE**
DATEIINTEGRITÄTSBEURTEILUNG ZUR ERKENNUNG VON MALWARE
ÉVALUATION D'INTÉGRITÉ DE FICHIER POUR DÉTECTER UN LOGICIEL MALVEILLANT

(30) Priority: 13.11.2020 US 202063113277 P
(43) Date of publication of application: 20.09.2023
(73) Proprietor: Bullwall Lab A/S, 7120 Vejle Øst (DK)
(72) Inventor: LOVMAND, Jan, 7120 Vejle Øst (DK); TORP, Lars, 7120 Vejle Øst (DK); MATEC, Ivan, 7120 Vejle Øst (DK); HOLM, Rasmus Bækgård, 7120 Vejle Øst (DK)
(74) Representative: Chas. Hude A/S
(86) International application number: PCT/EP2021/081480
(87) International publication number: WO 2022/101388

(56) References cited:
- US-A1- 2019 228 153
- JETHVA BRIJESH: "A new ransomware detection scheme based on tracking file signature and file entropy", MASTER THESIS, 15 December 2019 (2019-12-15), XP055880660, Retrieved from the Internet <URL:http://dspace.library.uvic.ca/bitstream/handle/1828/11066/Jethva_Brijesh_MASc_2019.pdf?sequence=1&isAllowed=y> [retrieved on 20220118]
- HAMPTON NIKOLAI ET AL: "Ransomware behavioural analysis on windows platforms", JOURNAL OF INFORMATION SECURITY AND APPLICATIONS, vol. 40, 16 March 2018 (2018-03-16), AMSTERDAM, NL, pages 44 - 51, XP055881106, ISSN: 2214-2126, DOI: 10.1016/j.jisa.2018.02.008

## Description

### FIELD OF THE INVENTION

The invention relates to a method of assessing the integrity of a file as part of continual malware risk monitoring of a file system, a computing device instructed to perform the method, and a program and a computer-readable medium with instructions for carrying out the method.

### BACKGROUND OF THE INVENTION

Attacks on digital systems and infrastructure takes many forms, some prominent types being viruses, malware, phishing and ransomware attacks. According to Cybersecurity Ventures, the cost of cybercrime is estimated to rise to $6 trillion by 2021, doubling it since 2015 and making it more lucrative than the trade of all illegal drugs combined. It is thus important for companies protect their digital systems. Ransomware attacks, by which hackers take company-critical data hostage against a cash pay-out, are especially dangerous. As they are likely unable to operate without business-critical data, companies face the terrible choice between paying the hackers for getting the data back - which may be illegal, and incentivising future hackers; or trying to essentially start the company over - commonly spelling the doom for the company if it faces any kind of competition.

Ransomware attacks may be initiated by phishing, by which a system insider is fooled into granting the hacker access to the system by imitating insider behaviour. Some companies thus train their employees in avoiding phishing. As it only takes one inattentive employee to fall for phishing to expose the whole organisation, this is a dangerous solution.

Anti-malware software geared against viruses does little against ransomware, since it is geared to detect modification of system files, allowing users to modify data files at will. Ransomware attacks leave the system intact while corrupting data files. Systems creating consistent backups or duplicates are safer, but works the best if the hackers do not realise how to dismantle it or missteps on encrypting the various mirrors of files. Documents Jethva Brijesh: "A new ransomware detection scheme based on tracking file signature and file entropy", Master thesis, University of Victoria, 15 December 2019; Hampton Nikolai et al.: "Ransomware behavioural analysis on windows platforms", Journal of Information Security and Applications, vol. 40, pages 44-51, DOI: 10.1016/ j.jisa.2018.02.008 and US 2019/228153 A1 constitute relevant prior art.

Thus, there is need for an improved ransomware protection.

### SUMMARY OF THE INVENTION

In an aspect of the invention, there is provided a method of assessing the integrity of files comprising the steps:
- continually monitoring files of a file system for file corruptions indicative of the presence of malware,
- detecting an updated file such as a modified file or a created file, the updated file emerging from an update event,
- screening file parameters of the updated file, where if file parameters are within predetermined bounds, the file is marked as integrous and wherein only in response to a file parameter having an anomaly transgressing a predefined anomaly threshold, deep inspecting the updated file, the deep inspection comprising:
   - retrieving, from a database, a sequence of tests specific to the file parameter anomaly of the updated file,
   - testing the updated file using the sequence of tests where the sequence of tests ascertains file integrity related to the updated file and the update event, where:
      - if the updated file and update event passes all tests of the sequence of tests, marking the file as being integrous, and
      - alternatively, transmitting an alert signal indicating a malware risk related to the updated file or update event.

The invention seeks to ascertain that the files are integrous according to parameters that define its normal operation. Thereby, it is possible to use a method that assume maliciousness of all events while still avoiding a large number of false positives. This ensures that any system supervisor can cognitively fathom the task of overseeing the ransomware protection, which in turn is extremely important. The system administrator needs to sort through fewer false positives to find real culprits, and alerts are generated less often, producing less alert fatigue. Antimalware protection is improved immensely, while burdening system administrators less.

Fewer mouse clicks are needed to control the malware system.

In an embodiment, the alert signal is accompanied by an inspection conclusion describing which specific file parameters and tests that prompted transmission of the alert signal, thereby providing a system supervisor with an informed dataset.

In an embodiment, a data interface is provided for a system supervisor to interact with the system, the data interface having a monitoring area and a threat area, where the monitoring area presents in graphical form monitoring data such as creation data, traffic data and modification data of a computing system, and the threat area shows each alert signal and/or updated file under deep inspection with relevant file parameter anomaly, thereby providing a quick overall overview and the ability to quickly respond to malware threats.

Thereby, the system supervisor gains unprecedented overview and control over the ransomware situation of the system, and may thus act even more decisively against actual threats. If update events suddenly spike, the system supervisor may use this to contextualise data from the threat area, for example. Fewer mouse clicks are also needed to control the malware system and identify relevant threats.

In an embodiment, the predetermined criteria based on which the updated file is screened comprise an algorithm trained over a training period for a given computing system, where the predetermined criteria initially fail to dismiss malware risks based on generic blacklisted behaviour and file contents, thereby escalating all ambiguous file updates. During the training period, the trained algorithm learns which ambiguous events can be whitelisted.

Thereby a monitoring system can be created that is specifically tailored to a given system behaviour. For example, enterprise networks often work with proprietary file extensions that may seems suspicious to an untrained anti-malware program, that is however completely benign. By starting with the most cautious approach and only whitelisting the specific files and behaviours that are known to be common and benign, any change in behaviour or file contents will stand out and be identified. This allows a strict monitoring program having significantly fewer false positives, which allows system supervisors to easily comprehend and identify any system disruptions.

In an embodiment, the sequence of tests comprises a name test evaluating the name of the updated file to determine whether through simple name manipulations the file can be opened as expected. Thereby, the deep inspection is improved and more false positives can be filtered out, thus sparing the system supervisor the cognitive burden of these as well as saving him work of dismissing the false positives. He thus saves mouse clicks.

In an embodiment, the sequence of tests comprises a parsing test involving evaluating the file type and determining whether the file can be understood as the type of file it seems to be at least in part and preferably in its whole. Thereby, the deep inspection is improved and more false positives can be filtered out, thus sparing the system supervisor the cognitive burden of these as well as saving him work of dismissing the false positives. He thus saves mouse clicks.

In an embodiment, the sequence of tests comprises a file entropy test, where the file entropy is determined to identify whether the file is compressed. Thereby, the deep inspection is improved and more false positives can be filtered out, thus sparing the system supervisor the cognitive burden of these as well as saving him work of dismissing the false positives. He thus saves mouse clicks.

In an embodiment, the sequence of tests comprises a compound test evaluating whether the updated file is part of a pattern over time of file content similarity or update event similarity. Thereby, the deep inspection is improved and more false positives can be filtered out, thus sparing the system supervisor the cognitive burden of these as well as saving him work of dismissing the false positives. He thus saves mouse clicks.

In an embodiment, the sequence of tests comprises a heuristics test, testing the updated file using a simulated environment or a decompiler. Thereby, the deep inspection is improved and more false positives can be filtered out, thus sparing the system supervisor the cognitive burden of these as well as saving him work of dismissing the false positives. He thus saves mouse clicks.

In an aspect, the invention relates to a computing device having a processor adapted to perform the steps of the invention.

In an aspect, the invention relates to a computer program comprising instructions which cause the computer to carry out the method of the invention when the program is executed by a computer.

In an aspect, the invention relates to a computer-readable medium comprising instructions which cause the computer to carry out the method of the invention when executed by a computer.

### DEFINITIONS

By false positive is meant when the assessment marks a file as anomalous even though it is in fact benign. A false negative is the opposite, when the assessment method fails to identify a malicious file or event.

A 'known good' is a thing such as a file, event or behaviour that is associated with an allowed and known phenomena, and whose normal conditions are known, as are their anomaly thresholds. A file type extension like '.docx' is a known good, as it is known how it should behave.

A 'known bad' is a thing such as a file, event or behaviour that is associated with a malicious and known phenomena, and whose malicious parameters are known.

By updated file is denoted a file that in its current edition / iteration has not yet been screened, irrespective of how the file has emerged; be it through an existing file being modified, or a new file being created.

File update and file update events are used synonymously throughout the specification to describe the event that marks the emergence of an updated file irrespective of how the file has emerged; be it through an existing file being modified, or a new file being created.

By file integrity is meant that the file makes sense when parsing, can be opened and isn't partly or wholly corrupted or compressed. In essence a file has file integrity if it is undamaged. File integrity can be gauged in various ways which the specification describes further.

Integrous is used in the specification as the adjective form of integrity to describe when a file has been determined to be in possession of the quality of integrity.

In this specification ransomware is considered as a type of malware.

A file has parameters, and these can be anomalous. When a file parameter is sufficiently anomalous, based on predetermined criteria to transgress at least one anomaly threshold, the method escalates to a deep inspection of the updated file. In the specification, the terms anomaly, anomalies, anomalous parameter, abnormal are all used synonymously.

Threshold and anomaly threshold are used synonymously. Below an anomality threshold, parameters are considered within bounds and normal. An anomality threshold can be transgressed by a combination of individual file parameters, as well as compound events, as is discussed further in the specification.

Malware risk assessment, risk assessment and assessment are all used synonymously to describe the general method of the invention and denotes that the method gauges the risk of malware in relation to the updated file. Ultimately, the risk that the method pinpoints needs to be reviewed by a system supervisor. The method thus, in a preferable embodiment, places any un-dismissed risks into the hands of a system supervisor who then has accurate information to act prudently. In this embodiment the method may not necessarily precisely identify a true positive (a malware infection) but instead it will determine a candidate updated file that may be a problem (a malware risk). In other words, in ambiguous situations, a system supervisor may be needed to determine whether the risk is substantiated. Since it accurately identifies and dismisses a varied catalogue of false positives, the method thus enables the system supervisor ample focus to act decisively when it matters. Of course, the system implementing the method of the invention may also identify known bads and determine that these are indicative of malware infections and/or corrupted by malware.

A risk assessment escalation and other mentioned types of escalations all relate to the transition between the scanning process of the invention and the deep inspection process of the invention.

Dismissing the risk or dismissing the assessment or dismissing the escalation all relate to marking the updated file as integrous. **In** these situations, the method continues to the next file, or simply dismisses the computational thread while working on the monitoring concurrently, depending on specific implementation.

### BRIEF DESCRIPTION OF THE DRAWINGS

In the following, example embodiments are described according to the invention, where
Fig. 1 illustrates an anti-malware method of an embodiment of the invention,
Fig. 2 show a plurality of tests for deep inspecting according to an embodiment of the invention, and
Fig. 3 illustrates a computing system monitoring a monitored system according to an embodiment of the invention.

### DETAILED DESCRIPTION

In the following the invention is described in detail through embodiments hereof that should not be thought of as limiting to the scope of the invention.

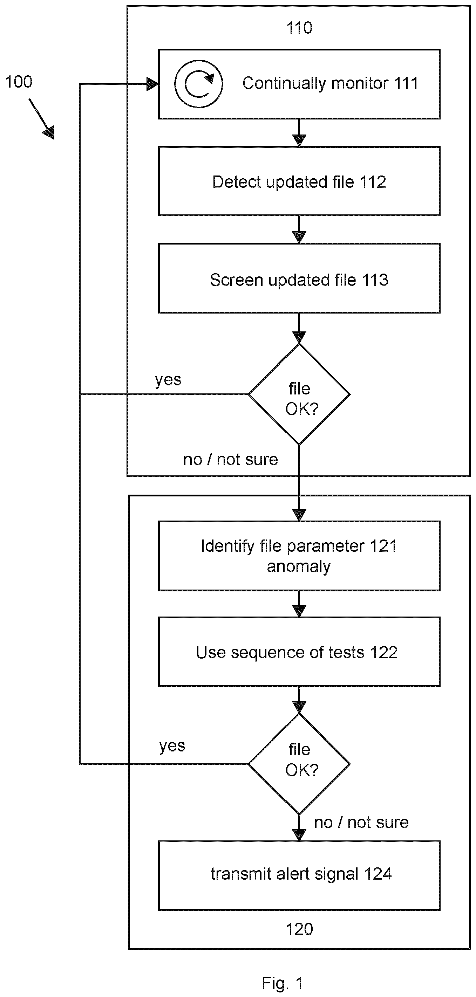

Fig. 1 illustrates the steps of an anti-malware method 100 of an embodiment of the invention. In general terms, the method has two overall phases of malware risk assessment, a scanning process 110 and a deep inspection process 120.

During scanning, when an updated file is detected 112, the method performs a computing-light screening 113 of the updated file. For most updated files, the scanning process 110 is then able to discontinue the risk assessment of the given updated file.

However, when it cannot, a deep scanning process 120 is conducted on the updated file. In the deep scanning process 120, file parameters 121 are used to identify the relevant test sequence 122 that may hopefully ascertain that the file is integrous / benign.

If successful, the file is considered to be integrous / benign and the risk assessment is discontinued. If unsuccessful, an alert signal is transmitted indicating a malware risk. The alert signal is preferably transmitted to a user interface of a system supervisor that may quickly respond to the alert signal.

By using a method as described, false positives may be mitigated, and system supervisors may gain a better overview of the system status. The improvement is so stark that it can be considered to allow the overview in the first place. If the false positives significantly outnumber the correctly identified malware events/attacks, then these false positives function as noise in the alarm system that the system supervisors need to correctly oversee the system. Therefore, by removing false positives, malware protection is actually improved.

An example of a false positive that the method can identify and dismiss is when a given file extension figures as both a known bad and a known good, such as the '.fit' extension. The computing-light scanning process 110 may take the cautious decision and mark it as a known bad, which prompts a risk assessment escalation. During the deep scan 120, the anomalous parameter, being the file extension 'fit', is used to retrieve the correct sequence of tests to determine whether an alert signal should be transmitted. File size is a useful indicator in this specific situation as the known good files using '.fit' extension fall within a specific size ratio. Other useful file parameters for the specific example is creation pace, as it is untypical to create more than three or five of these '.fit' files per week, while malware attacks can generate tens or hundreds of these files as fast as the processor allows it, i.e., in a few minutes.

In the specific example, the file extension served as the file parameter anomaly, and thus specific tests regarding the '.fit' file extension were used to assess the risk of the updated file.

The method of Fig. 1 will now be discussed in greater detail.

Commercially operated network may have thousands of file update events every minute or even every second, and it is important to be able to perform live monitoring. The monitoring is performed in the method of the invention by a centralized manner and not by the individual endpoints, i.e., computing devices. This results in a need for extensive computing power if deep scans are performed for every file update event. Performing a deep scan of each file update event on a network is infeasible. Therefore, a rudimentary screening of any updated file 113 is performed.

The scanning process 110 is a continually running program or process on a network or computer. It continually monitors 111 the system and allows fast and secure system monitoring by performing simple tasks only, then relegating the more computing intensive tasks to dedicated processes. When the method then detects 112 an updated file, the updated file is screened 113. Most of these detected 112 updated files are benign and arise from user-updated files such as image files, text files and so on, temporary files created in using browsers or other programs, and files created and modified by the system for its own operation. Therefore, on screening 113, these files are found to be integrous. Only if identified file parameters are anomalous enough to sufficiently transgress a predetermined anomaly threshold, will the method escalate the risk assessment to a deep scan 120 of the updated file.

In a preferred embodiment, the updated file, when detected 112, is assumed to be a risk. Only if it meets certain predetermined criteria that ensures that it is not a risk, will the risk be dismissed. This produces false positives in favour of false negatives.

The updated files are screened 113 using different file parameters, to ascertain whether the file is sufficiently normal to consider integrous, or whether the file has parameter anomalies transgressing anomaly thresholds for the given file. This could be a strange or unseen file type, or an unusual file location for example.

In an embodiment, the updated file is screened by evaluating its expected heuristics, where the expected behaviour of a file is gauged in at least two ways and then compared. In an embodiment hereof, it is preferably performed without decompiling or sandboxing the file. If the file is incongruous with itself, this is considered abnormal.

In an embodiment, the updated file is screened by performing a compound analysis, where if the file update event is similar to historic file update events within a certain time frame, this is considered abnormal / anomalous.

When an updated file has been screened 113 and the method has been unable to establish that the file is below a anomality threshold, the risk assessment is escalated for the file, and the deep inspection 120 is started.

It should be noted that if an updated file is a known bad or triggers the risk assessment escalation to a sufficient degree, an alert signal may be transmitted immediately or at least substantially immediately upon detection of the file update event. One benefit of the current invention is that it allows de-escalation through the deep inspection of events and files that are false positives in a 'presumed bad' system. If the threat is significantly high, transmitting the alert signal at once may be better.

The deep inspection identifies the file parameter 121 anomaly that prompted the risk assessment escalation, such as file type, creation/modification pace, creation location or metadata. Depending on the specific abnormal parameter, such as the '.fit' file extension described above, a specific list or sequence of tests 122 is then conducted in an effort to verify whether the updated file is in fact benign. It is possible to perform much more precise testing for malware when the specific context of the abnormality is known.

The updated file is assumed abnormal, and the risk assessment is only dismissed if the tests of the deep inspection show that the file falls below anomaly thresholds.

If the deep inspection cannot determine that the updated file is benign, an alert signal is transmitted, preferably to a system supervisor who can act on the alert to remedy the situation.

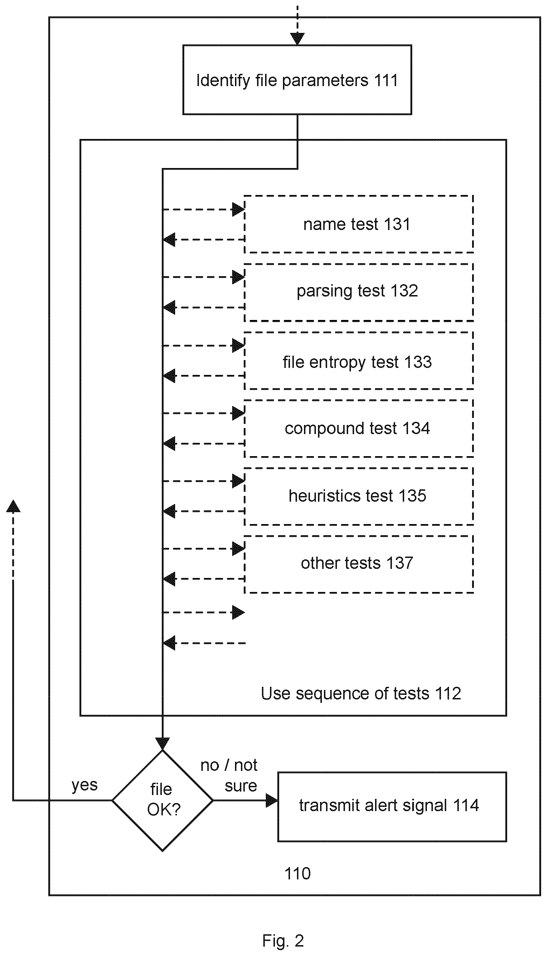

Fig. 2 shows a plurality of test types that can be used when deep inspecting an updated file.

A sequence of tests 122 for use with a specific abnormal parameter may involve any of these, as well as several specific tests of the same type.

As previously discussed, the deep inspection begins with identifying 121 the abnormal parameters that prompted the risk assessment escalation, and based on this abnormal parameter, retrieve a sequence of tests 122.

In an embodiment, the sequence of tests comprises a name test 131 involving reviewing the name of the file to identify whether the file may in fact be benign. In an embodiment hereof, the name test is specifically an extension test. Extensions may be benign or indicative of malware. For example, certain programs may append extensions for their own use. For a file 'mydocument.docx.uujpid' the last extension can be removed by the method. Then the method can determine whether the file can be opened as expected. If it can, the method can wait a predetermined time for the file to be deleted or for the latter extension to be removed. If the latter extension is removed, then the method again determines whether the file can be opened as expected. If it can be opened, the file is assumed to have been a temporary file. If the file cannot be opened, then the alert signal is transmitted.

In an embodiment, the sequence of tests comprises a parsing test 132 involving evaluating the file type and determining whether the file in part or in its whole can be understood as the type of file it seems to be. This may involve many sub-steps and specific tests depending on the specific type of file that the updated file seems to be.

In an embodiment, the sequence of tests comprises a file entropy test 133, where the file entropy is determined to identify whether the file is compressed. This may then be contextualised by the file type. An unexpectedly compressed file may be a sign of a ransomware attack.

In an embodiment, the sequence of tests comprises a compound test 134. If the risk assessment is escalated because of compounding events, the specific contexts for such compounding events are evaluated through tests. Compounding events are generally when a threat is identified because of a similarity pattern over time. The first such event may not be identified, however, when a second and a third identical event takes place, the events compound to generate a risk assessment escalation. There are many types of compounding events, and depending on the specific compounding abnormality, specific, different follow-up tests are necessary.

In an embodiment, the sequence of tests comprises a compound update test. The creation or modification of files in a short time span is a typical compound event. It can be the modification of several or all files in a folder over a short time span. If several files are modified in a short time span, the files can be reviewed for what they will do when opened. If they can be opened, the files can be marked as safe and the risk assessment can be dismissed. If they cannot be opened, an alert signal can be transmitted.

This can be contextualised by known bad file types and known susceptible file types. It is generally the case that user-generated files such as text files and media files are more prone to getting hit by ransomware attacks on the assumption that these are the most valuable to victims, and if these start changing format it is an indication that the system may be compromised.

Another compound modification test scenario is to test whether files are being compressed. If the creation/modification pacing matches a certain predetermined pattern, such as more than x files/min, and if the files are of a compression archive format, further tests are performed. Number of compressed files, the presence of password protection, and ownership of file/update events can all be used to determine whether the event is a malware related or not. Typically, ransomware attacks are carried out by one or a specific subset of compromised employee accounts or system user accounts.

In an embodiment, the sequence of tests comprises a compound data test. The creation of a plurality of identical or similar files among folders with either identical contents or similar contents is a known ransomware attack pattern. The file parameter anomaly is creation pace, and more precise analysis can be made of this first. Tests that can then be used are checking file size similarity and content similarity as well as ownership identity.

In an embodiment, the updated file may be tested using a heuristics test in the shape of either a simulated environment or a decompiler to parse the resulting machine code.

Other types of tests may be envisioned as well.

Depending on the outcome of the sequence of tests, the deep inspection 120 then produces a verification of the legitimacy of the file according to filetype or transmits an alert signal 114.

It should be evident to the reader that the tests can be mixed and matched based on the specific abnormal parameter(s) that trigger a risk assessment escalation. It should furthermore be clear that a given sequence of tests can be concluded before every test in a sequence has been carried out if a premature conclusion can be reached. This is typically the case where an updated file fails an early test, and the sequence of tests is aborted to transmit an alert signal at once.

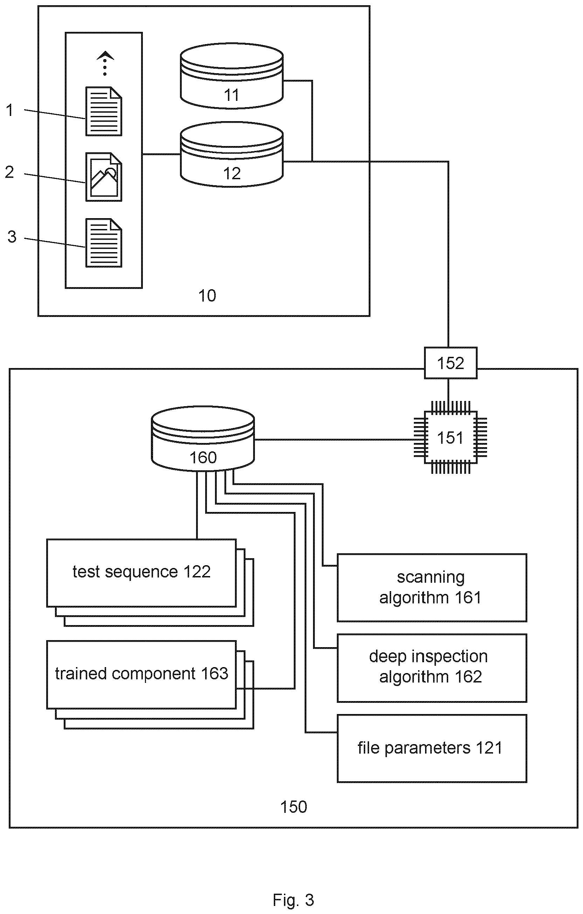

Fig. 3 illustrates a computing device 150 for carrying out the method of the invention connected to a monitored system 10.

The computing device 150 comprises a processor 151, a database 160 and a networking interface 152. The computing device 150 is connected to the monitored system 10 through the networking interface 152. The monitored system may comprise a plurality of servers 11, 12 and other components as well. In the shown embodiment, certain updated files 1, 2, 3 in a database 12 are being screened by the computing device 150. This is achieved using a scanning algorithm 161 stored in the database 160 of the computing device 150. Numerous files are scanned and screened without producing any escalations. As is seen, the method is thus carried out centrally / by a different device than the monitored system 10 / endpoint device.

The files are screened by comparing certain file parameters against expected threshold values also stored with the file parameters. The file parameters can be file type or creation pace or compound modifications or other such parameters with which the file can be evaluated. For file types, anomalies can be unexpected file types, either depending on location in a database or generally.

When the computing device identifies that an updated file 1 has a file parameters that transgresses an anomaly threshold, the scanning algorithm instructs the processor 151 to escalate the risk assessment of the updated file 1, whereby the processor 151 starts a deep inspection algorithm 162 to perform a deep inspection of the first file 1. Using the anomaly that prompted the risk assessment escalation as an input to the further process, one test sequence 122 from among a plurality of such test sequences is retrieved from the database 160 and performed on the updated file. Depending on how the test sequence 122 ends/terminates, the deep inspection algorithm 162 either transmits an alert signal to a system supervisor or dismisses the risk assessment.

It has been described that the method may comprise a trained component 163. The computing device 150 is connected to the monitored system 10 and at first observes the system for a run-in period. The computing system is set up to initially generate risk assessment escalations for all grey-zone update events. This can be an issue for commercial systems that may operate with proprietary or at least rare file extensions and appended file extension, specific traffic patterns and specific update regimes. All of these may generate false positives and would overwhelm a system supervisor if left unremedied. The identified false positives are then trained into the trained component 163 either manually or automatically. In any case, what results after a run-in period of perhaps a couple of weeks is a monitoring system that has learned the local normal and the bounds of anomality thresholds, while still being able to be very strict with any abnormal content or behaviour.

## Claims

1. A method (100) of assessing the integrity of files (1, 2, 3) comprising the steps:
- continually monitoring (111) files of a file system (10) for file corruptions indicative of the presence of malware (10),
- detecting (112) an updated file (1) such as a modified file or a created file, the updated file emerging from an update event,
- screening (113) file parameters (121) of the updated file, where if file parameters are within predetermined bounds, the file is marked as integrous and wherein only in response to a file parameter (121) having an anomaly transgressing a predefined anomaly threshold, deep inspecting (120) the updated file (1), the deep inspection (120) comprising:
- retrieving, from a database, a sequence of tests (122) specific to the file parameter (121) anomaly of the updated file (1),
- testing the updated file (1) using the sequence of tests (122) where the sequence of tests (122) ascertains file integrity related to the updated file (1) and the update event, where:
- if the updated file and update event passes all tests of the sequence of tests (122), marking the file as being integrous, and
- alternatively, transmitting an alert signal indicating a malware risk related to the updated file (1) or update event.

2. A method (100) according to claim 1, wherein the alert signal is accompanied by an inspection conclusion describing which specific file parameters and tests that prompted transmission of the alert signal, thereby providing a system supervisor with an informed dataset.

3. A method (100) according to any of claims 1-2, wherein a data interface is provided for a system supervisor to interact with the system, the data interface having a monitoring area and a threat area, where the monitoring area presents in graphical form monitoring data such as creation data, traffic data and modification data of a computing system, and the threat area shows each alert signal and/or updated file under deep inspection with relevant file parameter anomaly, thereby providing a quick overall overview and the ability to quickly respond to malware threats.

4. A method (100) according to any of claims 1-3, wherein the sequence of tests comprises a name test (131) evaluating the name of the updated file to determine whether through simple name manipulations the file can be opened as expected.

5. A method (100) according to any of claims 1-4, wherein the sequence of tests comprises a parsing test (132) involving evaluating the file type and determining whether the file can be understood as the type of file it seems to be at least in part and preferably in its whole.

6. A method (100) according to any of claims 1-5, wherein the sequence of tests comprises a file entropy test (133), where the file entropy is determined to identify whether the file is compressed.

7. A method (100) according to any of claims 1-6, wherein the sequence of tests comprises a compound test (134) evaluating whether the updated file is part of a pattern over time of file content similarity or update event similarity.

8. A method (100) according to any of claims 1-7, wherein the sequence of tests comprises a heuristics test, testing the updated file using a simulated environment or a decompiler.

9. A computing device (150) having a processor (151) adapted to perform the method steps of any of claims 1-8.

10. A computer program comprising instructions which cause the computer to carry out the method of any of claims 1-8, when the program is executed by a computer.

11. A computer-readable medium comprising instructions which cause the computer to carry out the method of any of claims 1-8, when executed by a computer.

## Patentansprüche

1. Ein Verfahren (100) zur Bestimmung der Integrität von Dateien (1, 2, 3), umfassend die Schritte:
- kontinuierliches Monitoring (111) der Dateien eines Dateisystems (10) nach Dateibeschädigungen, die indikativ sind für die Präsenz von Malware (10),
- Erkennen (112) einer aktualisierten Datei (1), wie eine modifizierte Date oder eine erstellte Datei, wobei die aktualisierte Datei einem Aktualisierungsereignis entspringt,
- Screenen (113) der Dateiparameter (121) der aktualisierten Datei, wobei, wenn Dateiparameter innerhalb vordefinierter Grenzen sind, die Datei als integer gekennzeichnet wird und wobei nur als Antwort auf einen Dateiparameter (121), der anomal einen vordefinierten Anomalie-Grenzwert überschreitet, eine genaue Überprüfung (120) der aktualisierten Datei (1) erfolgt, wobei die genaue Überprüfung (120) umfasst:
- Abrufen von einer Datenbank eine Sequenz von Tests (122), die spezifisch für die Anomalie des Dateiparameters (121) der aktualisierten Datei (1) ist,
- Testen der aktualisierten Datei (1) mit der Sequenz von Tests (122), wobei die Sequenz von Tests (122) die Dateiintegrität, die mit der aktualisierten Datei (1) und dem Aktualisierungsereignis verbunden ist, feststellt, wobei:
- wenn die aktualisierte Datei und das Aktualisierungsereignis alle Tests der Sequenz von Tests (122) bestehen, die Datei als integer markiert wird, und
- alternativ, Übertragen eines Alarmsignals, das ein Malware-Risiko, das mit der aktualisierten Datei (1) oder dem Aktualisierungsereignis verbunden ist, anzeigt.

2. Ein Verfahren (100) nach Anspruch 1, wobei das Alarmsignal von einer Überprüfungszusammenfassung begleitet wird, die beschreibt, welche Dateiparameter und -Tests genau die Übermittlung des Alarmsignals ausgelöst haben, wobei einem Systemüberwacher ein informierender Datensatz bereitgestellt wird.

3. Ein Verfahren (100) nach einem der Ansprüche 1-2, wobei eine Datenschnittstelle bereitgestellt wird, damit ein Systemüberwacher mit dem System interagieren kann, wobei die Datenschnittstelle einen Monitorbereich und einen Handlungsbereich hat, wobei der Monitorbereich in graphischer Form Monitoring-Daten präsentiert, wie Erstelldaten, Verkehrsdaten und Modifizierungsdaten eines Computersystems und der Handlungsbereich jedes Alarmsignal und/oder jede aktualisierte Datei unter genauer Überprüfung mit relevanter Parameter-Anomalie zeigt, wobei ein schneller allgemeiner Überblick bereitgestellt wird und die Möglichkeit geschaffen wird, schnell auf Malware-Bedrohungen zu reagieren.

4. Ein Verfahren (100) nach einem der Ansprüche 1-3, wobei die Sequenz von Tests einen Namenstest (131) umfasst, der den Namen der aktualisierten Datei evaluiert, um zu bestimmen, ob durch einfache Namensmanipulationen die Datei wie zu erwarten geöffnet werden kann.

5. Ein Verfahren (100) nach einem der Ansprüche 1-4, wobei die Sequenz von Tests einen Parsing-Test (132) umfasst, der die Evaluierung des Dateityps und das Bestimmen, ob die Datei als der Dateityp verstanden werden kann, der sie zu sein scheint, zumindest teilweise und vorzugsweise als Ganzes, umfasst.

6. Ein Verfahren (100) nach einem der Ansprüche 1-5, wobei die Sequenz von Tests einen Datei-Entropie-Test (133) umfasst, wobei die Datei-Entropie bestimmt wird, um zu bestimmen, ob die Datei komprimiert ist.

7. Ein Verfahren (100) nach einem der Ansprüche 1-6, wobei die Sequenz von Tests einen Verbindungs-Test (134) umfasst, der evaluiert, ob die aktualisierte Datei Teil eines zeitlichen Musters einer Dateiinhaltsähnlichkeit oder einer Aktualisierungsereignisähnlichkeit ist.

8. Ein Verfahren (100) nach einem der Ansprüche 1-7, wobei die Sequenz von Tests einen heuristischen Test umfasst, der die aktualisierte Datei mit einer simulierten Umwelt oder einem Dekompilierer testet.

9. Eine Computervorrichtung (150) mit einem Prozessor (151), der adaptiert ist, um die Verfahrensschritte nach einem der Ansprüche 1-8 auszuführen.

10. Ein Computerprogramm umfassend Instruktionen, die den Computer veranlassen das Verfahren nach einem der Ansprüche 1-8 auszuführen, wenn das Programm von einem Computer ausgeführt wird.

11. Ein computerlesbares Medium umfassend Instruktionen, die den Computer veranlassen das Verfahren nach einem der Ansprüche 1-8 auszuführen, wenn es von einem Computer ausgeführt wird.

## Revendications

1. Procédé (100) d'évaluation de l'intégrité de fichiers (1, 2, 3) comprenant les étapes suivantes :
- surveiller continuellement (111) les fichiers d'un système de fichiers (10) pour détecter des corruptions de fichiers indiquant la présence de logiciels malveillants (10),
- détecter (112) un fichier mis à jour (1) tel qu'un fichier modifié ou un fichier créé, le fichier mis à jour émergeant d'un événement de mise à jour,
- contrôler (113) des paramètres de fichier (121) du fichier mis à jour, où le fichier est marqué comme correct si les paramètres de fichier sont dans des limites prédéterminées, et dans lequel seulement en réponse à un paramètre de fichier (121) présentant une anomalie qui transgresse un seuil d'anomalie prédéfini, une inspection approfondie (120) du fichier mis à jour (1), l'inspection approfondie (120) comprenant :
- à partir d'une base de données, récupération d'une séquence de tests (122) spécifique à l'anomalie du paramètre de fichier (121) du fichier mis à jour (1),
- tester le fichier mis à jour (1) à l'aide de la séquence de tests (122) où la séquence de tests (122) vérifie l'intégrité de fichier liée au fichier mis à jour (1) et à l'événement de mise à jour, où :
- si le fichier mis à jour et l'événement de mise à jour réussissent tous les tests de la séquence de tests (122), marquant le fichier comme correct et
- alternativement, transmettre un signal d'alerte indiquant un risque de logiciels malveillants lié au fichier mis à jour (1) ou à l'événement de mise à jour.

2. Procédé (100) selon la revendication 1, dans lequel le signal d'alerte est accompagné d'une conclusion de l'inspection décrivant les paramètres de fichier et les tests spécifiques qui ont provoqué la transmission du signal d'alerte, fournissant ainsi à un superviseur de système un ensemble de données informées.

3. Procédé (100) selon l'une quelconque des revendications 1 à 2, dans lequel une interface de données est fournie à un superviseur de système afin d'interagir avec le système, l'interface de données ayant une zone de surveillance et une zone de menace, où la zone de surveillance présente sous forme graphique des données de surveillance telles que des données de création, des données du trafic et des données de modification d'un système informatique, et la zone de menace montre chaque signal d'alerte et/ou chaque fichier mis à jour sous l'inspection approfondie avec une anomalie de paramètre de fichier pertinente, fournissant ainsi un aperçu global rapide et la capacité de répondre rapidement aux menaces de logiciels malveillants.

4. Procédé (100) selon l'une quelconque des revendications 1 à 3, dans lequel la séquence de tests comprend un test de nom (131) évaluant le nom du fichier mis à jour pour déterminer si, par de simples manipulations de nom, le fichier peut être ouvert comme prévu.

5. Procédé (100) selon l'une quelconque des revendications 1 à 4, dans lequel la séquence de tests comprend un test d'analyse (132) impliquant l'évaluation du type de fichier et la détermination si le fichier peut être compris comme le type de fichier qu'il semble être, au moins en partie et de préférence dans son intégralité.

6. Procédé (100) selon l'une quelconque des revendications 1 à 5, dans lequel la séquence de tests comprend un test d'entropie de fichier (133), où l'entropie de fichier est déterminée pour identifier si le fichier est compressé.

7. Procédé (100) selon l'une quelconque des revendications 1 à 6, dans lequel la séquence de tests comprend un test composé (134) évaluant si le fichier mis à jour, au fil de temps, fait partie d'une structure d'un contenu de fichier similaire ou d'un événement de mise à jour similaire.

8. Procédé (100) selon l'une quelconque des revendications 1 à 7, dans lequel la séquence de tests comprend un test heuristique testant le fichier mis à jour à l'aide d'un environnement simulé ou d'un décompilateur.

9. Dispositif informatique (150) comportant un processeur (151) adapté pour exécuter les étapes de procédé selon l'une quelconque des revendications 1 à 8.

10. Programme informatique comprenant des instructions qui amènent l'ordinateur à exécuter le procédé selon l'une quelconque des revendications 1 à 8, lorsque le programme est exécuté par un ordinateur.

11. Support lisible par ordinateur comprenant des instructions qui amènent l'ordinateur à exécuter le procédé selon l'une quelconque des revendications 1 à 8, lorsqu'il est exécuté par un ordinateur.
